# NEUE EUROPÄISCHE PATENTSCHRIFT

(11) **EP 2 687 072 B2**
(45) Veröffentlichungstag und Bekanntmachung des Hinweises auf die Entscheidung über den Einspruch: **19.09.2018**
(45) Hinweis auf die Patenterteilung: 18.03.2015
(21) Anmeldenummer: 13401072.7
(22) Anmeldetag: 15.07.2013
(51) Int. Cl.: A01B 15/10

(54) **Boden führende Werkzeuge für Bodenbearbeitungswerkzeuge**
Soil-guiding tools for soil cultivation tools
Outils suivant le sol pour outils destinés au traitement du sol

(30) Priorität: 18.07.2012 DE 102012106460
(43) Veröffentlichungstag der Anmeldung: 22.01.2014
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, Dr., 49170 Hagen a TW (DE)
(74) Vertreter: Grünecker Patent- und Rechtsanwälte PartG mbB

(56) Entgegenhaltungen:
- EP-A1- 1 586 229
- WO-A1-2006/032954
- DE-A1- 3 318 159
- DE-A1- 10 359 466
- DE-A1-102005 041 350
- DE-A1-102011 055 031
- DE-A1-102011 055 034
- DE-U1-202011 002 801
- GB-A- 2 154 413
- MATEK W. ET AL: 'Roloff/Matek Maschinenelemente', Bd. 12. AUF., 1992, FRIEDR. VIEWEG & SOHN, BRAUNSCHWEIG Seiten 56 - 67

## Beschreibung

Die Erfindung bezieht sich auf ein Bodenbearbeitungsgerät mit zumindest einem Bodenmaterial führenden Werkzeug in Form eines Pfluges mit zumindest einem Bodenmaterial führenden Streichblech öder einem oder mehreren Streichblechstreifen, welches oder welcher mittels einer Kleberschicht und mittels eines Verbindungselementes an einem Tragkörper befestigt ist.

Ein solches Bodenbearbeitungsgerät ist aus der EP 1 586 229 bekannt. Dieses Bodenbearbeitungsgerät, das als Pflug ausgebildet ist mit einem Streichblech oder Streichblechstreifen als Werkzeug bzw. Werkzeuge, ist über ein mit dem Werkzeug mittels einer Klebeschicht verbundenen Befestiger mit dem Tragkörper verbunden. Dieser Befestiger ist an der Rückseite des Werkzeuges, insbesondere an der Rückseite eines Streichblechstreifens festgelegt, ohne dass eine zusätzliche Bohrung oder dergleichen Ausnehmung zur Anordnung eines Verbindungselementes vorzusehen ist. Das Werkzeug soll daher eine homogene Einheit bilden, ohne dass es durch irgendwelche Einflüsse in Bodenmaterial führenden Bereichen geschwächt ist. Die Befestigungseinheit ihrerseits hat eine Gewindebohrung, um über ein Verbindungselement mit dem Tragkörper verbunden zu sein. Damit das Werkzeug durch die Klebeschicht sicher an der Befestigungseinheit gehalten werden kann, ist eine exakte Vorbereitung des rückwärtigen Flächenbereiches als Klebebereich an dem Werkzeug vorzubereiten. Zudem ist ein exaktes Aufkleben dieser rückwärtigen Befestigungsfläche des Werkzeuges an dem Befestiger erforderlich, da zwischen dem Befestiger und dem Werkzeug kein weiteres Sicherungselement in Gestalt des Verbindungselementes vorgesehen werden kann. Dies ist nachteilig und kann im rauen Alltagsbetrieb eines derartigen Bodenbearbeitungswerkzeuges für die Funktionsunfähigkeit des Bodenbearbeitungsgerätes nach sich ziehenden Verschleißerscheinungen insbesondere an der Verbindung zwischen dem Werkzeug und der Befestigungseinheit führen.

Es ist daher Aufgabe der vorliegenden Erfindung, einen Pflug der eingangs genannten Art zu schaffen, bei dem eine sichere Verbindung zwischen dem als Streichblech oder Streichblechstreifen gebildeten Werkzeug und dem Tragkörper mit genauer Positionierung geschaffen ist.

Zur Lösung dieser Aufgabe zeichnet sich das Bodenbearbeitungsgerät der eingangs genannten Art durch die kennzeichnenden Merkmale des Anspruchs 1 aus.

Damit ist ein Bodenbearbeitungsgerät geschaffen, bei dem das Bodenbearbeitungswerkzeug weiterhin mit dem Verbindungselement verklebt werden kann. Durch die Positionierungselemente ist das Verbindungselement an vorbestimmter Stelle und ohne Montagefehler an dem Werkzeug ohne zusätzliche Hilfsmittel festzulegen. Durch die Positionierungselemente werden zusätzliche Klebeflächen gebildet Somit können plane Flächen des Verbindungselementes, beispielsweise plane Kopfflächen eines Nietes oder einer Schraube flächenbündig an einer ebenen Fläche des Werkzeuges festgelegt werden mittels einer Klebeschicht, wohingegen auch Ausnehmungen und Anformungen, die die Positionierungselemente sowohl an dem Verbindungselement als auch an dem Werkzeug darstellen, ebenfalls Klebeflächen ausbilden können, so dass dadurch die Klebeflächen wirksam erhöht sind.

Die entsprechenden Positionierungselemente in Gestalt von Anformungen und kongruent ausgebildeten Ausnehmungen können dabei auch Anschlagflächen bilden, die als Verdrehsicherung wirken und somit auch Drehmomente und dergleichen mechanische Belastungen als mechanische Anschläge aufnehmen können. Erfindungsgemäß sind an dem Werkzeug Ausnehmungen oder Vertiefungen vorgesehen. Diese durchdringen das Werkzeug nicht und sind auch bevorzugt nur an der Rückseite des Werkzeuges vorgesehen, d.h. an der Seite, die das Bodenmaterial nicht führen. Die gegenüberliegende Vorderseite des Werkzeuges, also die Seite, die das Bodenmaterial führt, ist daher frei von Ausnehmungen, Einschnürungen und dergleichen und damit homogen auszubilden, so dass diese Oberfläche eine hinreichende Härte aufweisen kann, ohne dass die Gefahr von Dauerbrüchen, Rissen und dergleichen besteht. Die Materialschwächung in Gestalt von Ausnehmungen auf der Rückseite ist dabei bewusst in Kauf genommen, um dort auch die mechanischen Anschläge und dergleichen aufnehmen zu können neben der Klebeverbindung, so dass das Werkzeug insgesamt mit einer großen Verschleißfestigkeit und mithin mit einer großen Härte zur Verfügung gestellt werden kann.

Erfindungsgemäß ist eine entsprechende Ausnehmung so gestaltet, dass sie sich maximal über die Hälfte der Tiefe des Werkzeuges erstreckt.

Weitere vorteilhafte Ausgestaltungen der Erfindung sind in den weiteren Unteransprüchen, der nachfolgenden Beschreibung und der Zeichnung beschrieben. In der Zeichnung zeigen:
- Fig. 1: in einer perspektivischen Darstellung ein Ausführungsbeispiel eines Werkzeuges für ein Bodenbearbeitungsgerät in Gestalt eines Streichbleches in Streifenkörperausbildung für einen Pflug als Bodenbearbeitungsgerät;
- Fig. 2: eine Schnittdarstellung gemäß der Schnittlinie II-II in Fig. 1;
- Fig. 3: eine Schnittdarstellung gemäß der Schnittlinie III-III in Fig. 2;
- Fig. 4: perspektivisch ein Ausführungsbeispiel eines Befestigungselementes, eingesetzt in eine entsprechende Ausnehmung in dem Werkzeug;
- Fig. 5: das Ausführungsbeispiel nach Fig. 4 vor der Montage in perspektivischer Darstellung;
- Fig. 6: eine Schnittdarstellung eines alternativen Ausführungsbeispiels, und
- Fig. 7: ausschnittsweise in perspektivischer Darstellung ein anderes Ausführungsbeispiel vor Montage des Verbindungselementes.

In der Zeichnung sind grundsätzlich gleichwirkende Teile mit übereinstimmenden Bezugsziffern versehen. Allgemein mit 1 ist in der Zeichnung ein Pflugkörper als Bodenbearbeitungsgerät beziffert, der ein Streichblech 2 sowie Einzelblechstreifen 2.1 aufweist. Des Weiteren ist ein Scharblatt 3 sowie eine Scharspitze 4 vorgesehen. Die Einzelblechstreifen 2.1 sind an einem Tragkörper 5 sowie an dem Streichblech 2 über eine Klebeverbindung 7 und ein Verbindungselement 8 gehalten. Das Verbindungselement hat ein Gewinde und ist über eine Mutter 9 unter Zwischenlage einer Unterlegscheibe 10 befestigt.

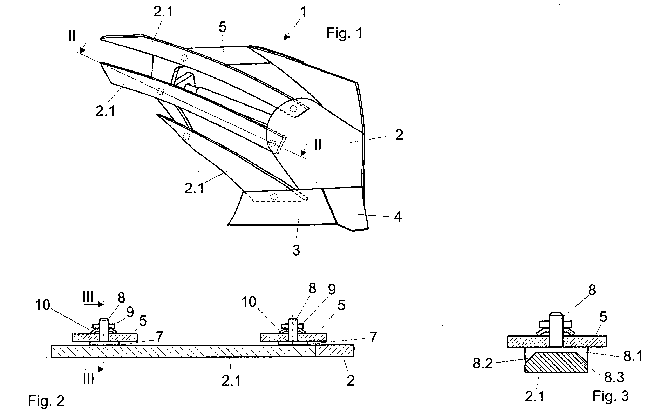

Die Darstellung nach Fig. 3 verdeutlicht, dass das Verbindungselement 8 als Schraubelement ausgebildet ist mit einem besonderen Schraubenkopf 8.1, der an den Seitenrändern schräg - im montierten Zustand gemäß Fig. 3 - nach unten zulaufende Randbereiche 8.2 aufweist, die in eine entsprechende kongruent ausgebildete Ausnehmung 8.3 an der Rückseite des Werkzeuges (Einzelstreichblechstreifen) 2.1 eingreift. Die Tiefe der Ausnehmung 8.3 erstreckt sich dabei maximal über die Hälfte der Gesamttiefe des Werkzeuges 2.1. Die gegenüberliegend ausgebildete Oberfläche des Werkzeuges 2.1 ist mithin ausnehmungsfrei und mithin homogen ausgebildet. Diese homogene Oberfläche kommt mit dem Bodenmaterial in Berührung und ist mithin mit einer hinreichenden Härte und Verschleißunanfälligkeit ausgerüstet.

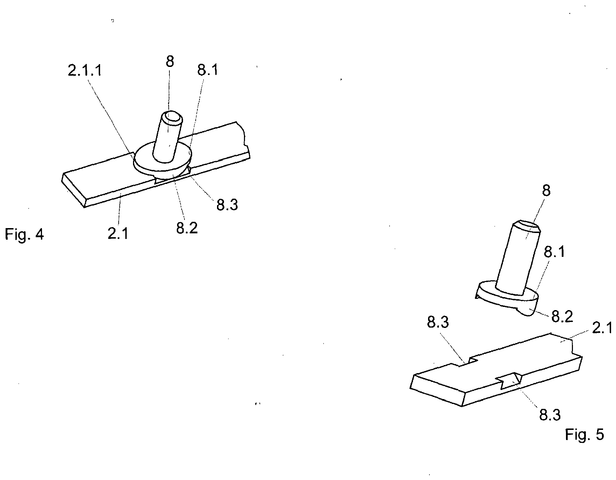

In den Fig. 4 und 5 ist das in Fig. 3 im Schnitt dargestellte Ausführungsbeispiel in perspektivischer Darstellung veranschaulicht, einmal im montierten Zustand (Fig. 4) und einmal in einem Zustand vor der Montage. Die dargestellten Teile sind mit übereinstimmenden Bezugsziffern versehen. Ersichtlich ist die Anformung 8.2 des Verbindungselementes 8 in der hinsichtlich der Schrägflächen kongruent ausgebildeten Ausnehmung 8.3 gelegen. Ansonsten kann der Kopf des Verbindungselementes 8 rund oder oval ausgebildet sein. Dazu ist eine entsprechende Ausnehmung in dem Werkzeug ebenfalls enthalten. Diese trägt die Bezugsziffer 2.1.1.

Im Ausführungsbeispiel nach Fig. 5 ist das Verbindungselement 8 vor der Montage dargestellt. Eine kleine Ausführungsvariante ergibt sich hier gegenüber dem Ausführungsbeispiel nach Fig. 4, indem dort nur die mit Schrägflächen versehene Ausnehmung 8.3 in dem Werkzeug 2.1 vorgesehen ist, jedoch nicht in die entsprechende ovale Ausnehmung 2.1.1.

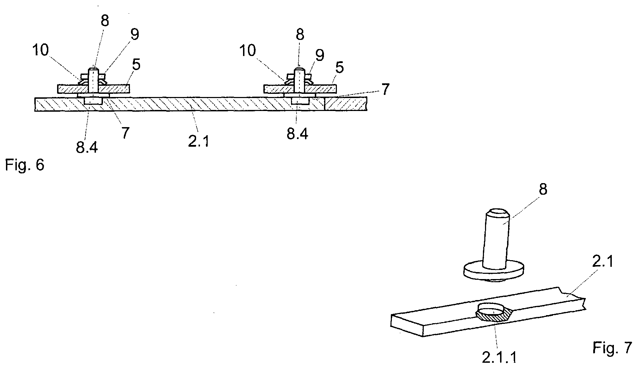

Die Ausführung nach Fig. 6 entspricht im Wesentlichen der Darstellung nach Fig. 2. Hier ist noch ersichtlich, dass das Verbindungselement 8 wiederum einen runden Kopf 8.4 trägt, der in eine entsprechende Ausnehmung 2.1.1 des Werkzeuges 2.1 eingesetzt ist und dort insgesamt verklebt wurde.

## Patentansprüche

1. Pflug mit zumindest einem Pflugkörper mit einem Bodenmaterial führenden Streichblech (2) oder Streichblechstreifen (2.1), welches oder welcher mittels einer Kleberschicht (7) und mittels eines Verbindungselementes (8) an einem Tragkörper befestigt ist, wobei das Verbindungselement (8) mittels der Kleberschicht (7) mit dem Streichblech (2) oder Streichblechstreifen (2.1) verklebt ist, **dadurch gekennzeichnet, dass** an dem Verbindungselement (8) und an dem Streichblech (2) oder Streichblechstreifen (2.1) kongruent zueinander ausgebildete Positionierungselemente (8.1, 8.2, 8.3) vorgesehen sind; dass an dem Streichblech (2) oder Streichblechstreifen (2.1) Ausnehmungen (8.3) oder Bohrungen (2.1.1) vorgesehen sind zur Anordnung von einer Anformung (8.1) oder mehreren Anformungen (8.2) als Positionierungselement(e) des Verbindungselementes (8); und dass die Ausnehmung oder Vertiefung (2.1.1, 8.3) in dem Streichblech (2) oder Streichblechstreifen (2.1) eine Tiefe aufweist, die maximal der halben Dicke des Werkzeuges (2.1) entspricht.

2. Pflug nach Anspruch 1, **dadurch gekennzeichnet, dass** einzelne Positionierungselemente (8.1, 8.2, 8.3) Klebeflächen zwischen dem Verbindungselement (8) und dem Streichblech (2) oder Streichblechstreifen (2.1) ausbilden.

3. Pflug nach einem der Ansprüche 1 bis 2, **dadurch gekennzeichnet, dass** einzelne Positionierungselemente (8.1, 8.2, 8.3) Anschläge als Verdrehsicherung zwischen dem Verbindungselement (8) und dem Streichblech (2) oder Streichblechstreifen (2.1) ausbilden.

4. Pflug nach einem der Ansprüche 1 bis 3, **dadurch gekennzeichnet, dass** die das Bodenmaterial führende Fläche des Streichblechs (2) oder Streichblechstreifens (2.1) homogen und damit frei von Ausnehmungen oder Bohrungen ausgebildet ist.

5. Pflug nach einem der Ansprüche 1 bis 4, **dadurch gekennzeichnet, dass** das Streichblech (2) oder der Streichblechstreifen (2.1) auf seiner Rückseite in Kantenbereichen von der Grundfläche her schräg ausgebildete Ausnehmungen (8.2) aufweist, in die entsprechende kongruent ausgebildete Randansätze (8.1) eines Verbindungselementes (8) eingreifen, wobei das Verbindungselement (8) zwischen den kongruent ausgebildeten Randansätzen (8.1) eine planebene Klebefläche (7) aufweist, die mit einer entsprechenden Kontaktfläche des Streichblechs (2) oder Streichblechstreifens (2.1)zusammenwirkt.

6. Pflug nach einem der Ansprüche 1 bis 5, **dadurch gekennzeichnet, dass** das Streichblech (2) oder der Streichblechstreifen (2.1) eine kreisrunde oder ovale oder langlochartige Ausnehmung (2.1.1) aufweist, in die zumindest teilweise versenkt ein Verbindungselement (8) einsetzbar ist, wobei planebene Kontaktflachen und/oder Randbereiche als Klebeflächen (7) zwischen Verbindungselement (8) und Streichblech (2) oder Streichblechstreifen (2.1)ausgebildet sind.

## Claims

1. Plough having at least one plough body with a soil-material-guiding mouldboard (2) or mouldboard slat (2.1) which is fastened to a supporting body by means of an adhesive layer (7) and by means of a connecting element (8), wherein the connecting element (8) is adhered to the mouldboard (2) or mouldboard slat (2.1) via the adhesive layer (7) **characterized in that** positioning elements (8.1, 8.2, 8.3) that are formed congruently with one another are provided on the connecting element (8) and on the mouldboard (2) or mouldboard slat (2.1); that recesses (8.3) or bores (2.1.1) are provided on the mouldboard (2) or mouldboard slat (2.1) for the arrangement of an integral formation (8.1) or a plurality of integral formations (8.2) as positioning element(s) of the connecting element (8); and that the recess or depression (2.1.1, 8.3) in the mouldboard (2) or mouldboard slat (2.1) has a depth which corresponds at most to half the thickness of the tool (2.1).

2. Plough according to Claim 1, **characterized in that** individual positioning elements (8.1, 8.2, 8.3) form adhesive faces between the connecting element (8) and the mouldboard (2) or mouldboard slat (2.1).

3. Plough according to one of Claims 1 to 2, **characterized in that** individual positioning elements (8.1, 8.2, 8.3) form stops as rotation prevention means between the connecting element (8) and the mouldboard (2) or mouldboard slat (2.1).

4. Plough according to one of Claims 1 to 3, **characterized in that** the soil-material-guiding face of the mouldboard (2) or mouldboard slat (2.1) is homogeneous and thus free of recesses or bores.

5. Plough according to one of Claims 1 to 4, **characterized in that** the mouldboard (2) or mouldboard slat (2.1) has recesses (8.2) which are formed in an oblique manner from the base face in edge regions on its rear side, and in which corresponding congruently formed peripheral extensions (8.1) of a connecting element (8) engage, wherein the connecting element (8) has a planar adhesive face (7) between the congruently formed peripheral extensions (8.1), said planar adhesive face (7) interacting with a corresponding contact face of the mouldboard (2) or mouldboard slat (2.1).

6. Plough according to one of Claims 1 to 5, **characterized in that** the mouldboard (2) or mouldboard slat (2.1) has a circular or oval or slot-like recess (2.1.1) into which a connecting element (8) is insertable in an at least partially countersunk manner, wherein planar contact faces and/or peripheral regions are formed as adhesive faces (7) between the connecting element (8) and the mouldboard (2) or mouldboard slat (2.1).

## Revendications

1. Charrue comprenant au moins un corps de charrue avec un versoir (2) guidant la matière de sol ou avec une lame de versoir (2.1), lequel ou laquelle est fixé(e) au moyen d'une couche d'adhésif (7) et au moyen d'un élément de liaison (8) à un corps de support, l'élément de liaison (8) étant collé au versoir (2) ou à la lame de versoir (2.1) au moyen de la couche d'adhésif (7) **caractérisé en ce que** des éléments de positionnement (8.1, 8.2, 8.3) réalisés de manière à être en coïncidence les uns avec les autres sont prévus au niveau de l'élément de liaison (8) et au niveau du versoir (2) ou de la lame de versoir (2.1) ; des évidements (8.3) ou des alésages (2.1.1) sont prévus au niveau du versoir (2) ou de la lame de versoir (2.1) pour disposer une pièce façonnée (8.1) ou plusieurs pièces façonnées (8.2) en tant qu'élément(s) de positionnement de l'élément de liaison (8) ; et l'évidement ou le renfoncement (2.1.1, 8.3) dans le versoir (2) ou dans la lame de versoir (2.1) présente une profondeur qui correspond au maximum à la moitié de l'épaisseur de l'outil (2.1).

2. Charrue selon la revendication 1, **caractérisé en ce que** des éléments de positionnement individuels (8.1, 8.2, 8.3) constituent des surfaces adhésives entre l'élément de liaison (8) et le versoir (2) ou la lame de versoir (2.1).

3. Charrue selon l'une quelconque des revendications 1 à 2, **caractérisé en ce que** des éléments de positionnement individuels (8.1, 8.2, 8.3) constituent des butées en tant que moyen de fixation en rotation entre l'élément de liaison (8) et le versoir (2) ou la lame de versoir (2.1).

4. Charrue selon l'une quelconque des revendications 1 à 3, **caractérisé en ce que** la surface du versoir (2) ou de la lame de versoir (2.1) guidant la matière du sol est réalisée de manière homogène et par conséquent sans évidement ni alésage.

5. Charrue selon l'une quelconque des revendications 1 à 4, **caractérisé en ce que** le versoir (2) ou la lame de versoir (2.1) présente sur son côté arrière dans les régions d'arrête à partir de la surface de base, des évidements réalisés obliquement (8.2) dans lesquels s'engagent des pièces de bord rapportées (8.1) d'un élément de liaison (8) réalisées de manière coïncidente correspondante, l'élément de liaison (8) présentant une surface adhésive plane (7) entre les pièces de bord rapportées (8.1) réalisées de manière coïncidente, laquelle surface adhésive coopère avec une surface de contact correspondante du versoir (2) ou de la lame de versoir (2.1).

6. Charrue selon l'une quelconque des revendications 1 à 5, **caractérisé en ce que** le versoir (2) ou la lame de versoir (2.1) présente un évidement (2.1.1) circulaire ou ovale ou de type trou oblong dans lequel peut être inséré, de manière au moins en partie renfoncée, un élément de liaison (8), et des surfaces de contact planes et/ou des régions de bord étant réalisées en tant que surfaces adhésives (7) entre l'élément de liaison (8) et le versoir (2) ou la lame de versoir (2.1).
